# FASCICULE DE BREVET EUROPEEN

(11) **EP 2 691 186 B1**
(45) Date de publication et mention de la délivrance du brevet: **15.05.2019**
(21) Numéro de dépôt: 12717398.7
(22) Date de dépôt: 28.03.2012
(51) Int. Cl.: B07C 5/12, G01B 11/26, G01N 21/90, B65B 57/02

(54) **PROCEDE ET DISPOSITIF POUR LA MESURE DE LA VERTICALITE SUR UN RECIPIENT**
VERFAHREN UND VORRICHTUNG ZUR MESSUNG DER VERTIKALITÄT EINES BEHÄLTERS
METHOD AND DEVICE FOR MEASURING THE VERTICALITY OF A CONTAINER

(30) Priorité: 30.03.2011 FR 1152658
(43) Date de publication de la demande: 05.02.2014
(73) Titulaire: Tiama, 69390 Vourles (FR)
(72) Inventeur: LECONTE, Marc, F-69700 Loire Sur Rhone (FR); GARIN, Jean-François, F-69560 Saint-Romain-en-Gal (FR)
(74) Mandataire: Thibault, Jean-Marc
(86) Numéro de dépôt international: PCT/FR2012/050646
(87) Numéro de publication internationale: WO 2012/131251

(56) Documents cités:
- EP-A2- 0 341 849
- FR-A1- 2 314 474
- JP-A- 2005 091 060
- US-A1- 2006 192 954
- US-B1- 6 212 962

## Description

La présente invention concerne le domaine technique de l'inspection d'objets creux ou récipients au sens général, tels que par exemple des bouteilles, des pots, des flacons notamment en verre en vue d'effectuer des mesures sur la verticalité de tels récipients.

Dans le domaine technique de l'inspection de récipients notamment en verre tels que des bouteilles, il apparaît le besoin de mesurer la verticalité des récipients, pour garantir en particulier, leur embouteillage ou leur conditionnement. Il est à noter que dans l'état de la technique, la verticalité d'un récipient est exprimée de diverses manières. Par exemple, la verticalité d'un récipient est exprimée sous la forme d'un angle ou d'un degré d'inclinaison. Il est également connu d'exprimer la verticalité comme l'écart entre le centre du fond du récipient et le centre d'une section transversale du récipient prise selon une hauteur sélectionnée du récipient, comme la bague par exemple. A la place de prendre en compte la différence entre les centres des deux sections du récipient, la verticalité est aussi considérée comme la mesure de l'excursion radiale, sur un tour, d'un point du récipient pris à une hauteur considérée du récipient.

Quelle que soit la manière d'exprimer la verticalité, la mesure de la verticalité d'un récipient donne une information importante sur les caractéristiques dimensionnelles d'un récipient permettant par exemple de déceler son défaut de verticalité lorsque la mesure dépasse une valeur de référence. Dans l'état de la technique, de nombreuses solutions techniques ont été proposées pour mesurer la verticalité des bouteilles.

Par exemple, le brevet US 4 433 785 décrit un système de détection comportant deux roues libres en contact avec le fond de la bouteille. Pendant la rotation du récipient dans un poste d'inspection, les déplacements verticaux de ces deux roues sont mesurés à l'aide des capteurs de position électromagnétique. Un tel système n'est pas adapté à un contrôle à haute cadence en raison des risques de perte du contact des roues libres avec le fond des bouteilles. Par ailleurs, un tel système ne peut donner une mesure précise et présente un risque manifeste d'usure. De manière plus fondamentale, ce système mesure uniquement les mouvements du fond de la bouteille par rapport à l'axe de rotation, imposé par le poste d'inspection. De fait, lorsque le récipient présente par exemple des déformations sur le corps, il ne tourne plus autour de son axe de symétrie de sorte que la mesure de verticalité est fausse.

Le brevet US 7 010 863 décrit une autre technique consistant à remplacer, les deux roues libres, par deux capteurs optiques de mesure permettant de diriger une lumière en deux points du fond de la bouteille reposant sur un plan de pose. A partir de la lumière réfléchie par la bouteille et de la rotation de la bouteille, l'écart entre le plan de pose et un plan perpendiculaire à l'axe de rotation est déterminé en vue d'en déduire un défaut de verticalité. Un tel dispositif permet d'éliminer les inconvénients liés à l'utilisation de roues libres. Toutefois, le principe de mesure d'un tel dispositif repose sur l'hypothèse que le récipient est parfait en tout point à l'exception du fond qui est incliné. Cette hypothèse conduit à considérer que l'axe central du récipient est confondu avec l'axe de rotation du poste d'inspection de sorte qu'il suffit de mesurer les déplacements du fond du récipient. Or, en pratique l'axe du récipient n'est pas confondu avec l'axe de rotation du poste d'inspection. Aussi, la technique antérieure ne permet pas de donner une mesure réelle de la verticalité d'un récipient. De façon supplémentaire, les solutions antérieures connues ne permettent pas de mesurer la verticalité du col de tels récipients.

Par ailleurs, la demande de brevet EP 0 341 849 décrit un procédé pour mesurer le profil et la verticalité d'un récipient présentant un fond à partir duquel s'élève une paroi verticale. Le récipient est posé librement sur un plan d'appui qui est piloté en rotation pour permettre de réaliser des mesures sur toute la périphérie du récipient. Le plan d'appui du récipient sert de plan de référence pour la mesure de la verticalité. Or, dans le domaine de la mesure industrielle, les mesures de verticalité réalisées à partir d'une référence prise sur le système de manipulation ne sont pas fiables. Tel est le cas notamment pour la mesure de la verticalité de récipients sur un poste tournant situé sur une ligne de fabrication. En effet, un tel poste tournant de contrôle comporte un plan de pose pour le récipient et un système de mise en rotation du récipient, composé d'un galet d'entraînement en rotation du récipient qui se trouve placé en appui sur au moins deux butées lors de sa rotation. L'axe de rotation du récipient varie constamment de sorte que le mouvement est aléatoire et imprédictible Par ailleurs, il s'avère impossible de placer le fond du récipient dans le plan de référence constitué par le plan de pose compte tenu en particulier, de la section non circulaire des récipients (ovalisés ou avec méplats), de la présence de fonds boiteux, des déformations du récipient et des défauts affectant le système de mise en rotation du récipient.

Le brevet US 6 212 962 décrit également un dispositif d'inspection de récipients défilant en translation destiné en particulier à déterminer l'inclinaison du corps du récipient par rapport à son fond. Un tel dispositif ne permet pas de déceler un défaut de verticalité dans le cas où l'article présenterait par exemple une déformation de sa paroi à la hauteur de mesure d'un produit de référence. Ainsi, un creux, méplat ou ovalisation à une hauteur donnée conduirait de manière erronée à considérer l'article comme incliné.

La présente invention vise donc à remédier aux inconvénients de l'état de la technique en proposant une nouvelle technique permettant de mesurer la verticalité réelle présentée par des récipients, ces mesures étant réalisées sur la ligne de fabrication par un poste tournant pour permettre des mesures sur toute la périphérie des récipients.

Pour atteindre un tel objectif, l'objet de l'invention propose un procédé pour mesurer la verticalité sur un récipient présentant un fond à partir duquel s'élève une paroi verticale, le procédé consistant à faire tourner le récipient sur lui-même sur au moins un tour et à effectuer, au cours de la rotation du récipient, des mesures à différentes positions de rotation du récipient ;

Celui-ci consiste :
- à mesurer à chaque position de rotation du récipient, au moins :
   - la position selon un premier axe de mesure, d'au moins un premier point de mesure situé sur le fond,
   - la position selon un deuxième axe de mesure, d'un deuxième point de mesure situé sur le fond de façon diamétralement opposé au premier point de mesure,
   - la position selon un troisième axe de mesure, d'au moins un troisième point de mesure situé sur la paroi verticale à distance du fond,
   - et éventuellement la position selon un quatrième axe de mesure, d'au moins un quatrième point de mesure situé sur la paroi verticale à proximité du fond,
   - les premier, deuxième, troisième et quatrième axes de mesure étant coplanaires dans un plan de mesure,
- à calculer pour chaque position de rotation du récipient, une grandeur fonction d'un angle caractéristique de la verticalité du récipient et défini entre un premier segment passant par les premier et deuxième points de mesure et un deuxième segment sécant au premier segment et passant soit par le troisième point de mesure et le premier point de mesure soit par le troisième point de mesure et le quatrième point de mesure,
- et à mesurer la verticalité à partir des variations de la grandeur fonction de cet angle, considérées sur au moins un tour de rotation du récipient.

Le procédé selon l'invention offre l'avantage de pouvoir mesurer la verticalité réelle des récipients, de manière indépendante des conditions de manutention du poste d'inspection, permettant ainsi de s'affranchir de la rotation du récipient autour d'un axe non vertical, de la montée du récipient lors de l'inspection ou de l'ovalisation présentée par le récipient.

Le procédé selon l'invention comporte en outre en combinaison, l'une et/ou l'autre des caractéristiques additionnelles suivantes :
- à mesurer la verticalité en effectuant la différence entre la valeur maximale et la valeur minimale de la grandeur fonction de l'angle,
- à mesurer la verticalité, après une opération de filtrage des variations de la grandeur fonction de l'angle,
- à choisir l'angle défini entre le premier segment et le deuxième segment passant par le troisième point de mesure et le premier point de mesure,
- à mesurer à chaque position de rotation du récipient, la position selon au moins un quatrième axe de mesure voire un cinquième axe de mesure coplanaires aux premier, deuxième et troisième axes de mesure, d'au moins un quatrième point de mesure voire un cinquième point de mesure situés sur la paroi verticale du récipient en des lieux différents du troisième point de mesure,
- à choisir les positions du troisième et du quatrième points de mesure sur la paroi verticale situées sur le corps le plus loin possible du fond, et sur la bague du récipient, de manière à définir un angle défini entre le premier segment et le deuxième segment passant par le troisième et premier points de mesure et un autre angle défini entre le premier segment et le deuxième segment passant par le quatrième et premier points de mesure permettant de définir une mesure de verticalité de corps pour le point situé sur le corps et une mesure de verticalité totale pour le point situé sur la bague,
- à choisir au moins un angle défini entre le premier segment et le deuxième segment passant par le troisième point de mesure et le quatrième point de mesure situé à proximité du talon,
- à choisir la position du troisième point de mesure sur le corps le plus loin possible du fond pour déterminer une mesure de verticalité de corps et à choisir la position du cinquième point de mesure sur la bague du récipient de manière à définir un autre angle défini entre le premier segment et le deuxième segment passant les quatrième et cinquième points de mesure permettant de définir une mesure de verticalité totale,
- à déterminer une mesure de verticalité du col par rapport au corps à partir de la différence entre les mesures de verticalité totale et de corps,
- à calculer, pour chaque position de rotation du récipient, en tant que grandeur fonction de l'angle α défini par les premier, deuxième et troisième points de mesure ou défini par les premier, deuxième et quatrième points de mesure, l'écart entre les angles α₁ et α₂ ou l'écart entre les tangentes des angles α₁ et α₂, avec :
   - α₁ étant l'angle d'inclinaison entre le segment passant par les premier et deuxième points de mesure et un segment parallèle à un premier axe parallèle au troisième axe de mesure et faisant partie d'un repère orthonormé situé dans le plan de mesure,
   - et α₂ étant l'angle d'inclinaison entre le segment passant par soit par le premier et troisième ou quatrième points de mesure soit par les troisième et quatrième points de mesure et un segment parallèle à un deuxième axe parallèle aux premiers et deuxième axes de mesure et faisant partie du repère orthonormé,
- à référencer à une valeur nulle, les positions mesurées par les capteurs,
- à comparer la mesure de verticalité à une valeur de référence pour déterminer la présence ou non d'un défaut de verticalité,
- à mesurer la position des différents points de mesure à l'aide de capteurs de contact ou sans contact avec le récipient,
- à mesurer la position des différents points de mesure à l'aide de capteurs sans contact de type optique.

Un autre objet de l'invention est de proposer un dispositif pour mesurer la verticalité sur des récipients présentant un fond à partir duquel s'élève une paroi verticale, chaque récipient étant entraîné en rotation sur lui-même selon au moins un tour, le dispositif comportant un système de mesure relié à une unité de traitement et de calcul.

Le système de mesure comporte au moins trois, et éventuellement quatre capteurs de mesure adaptés pour mesurer la position selon un premier, un deuxième, un troisième et un quatrième axes de mesure coplanaires entre eux, respectivement d'un premier, d'un deuxième, d'un troisième et d'un quatrième points de mesure, le premier et le deuxième points de mesure étant situés sur le fond du récipient de façon diamétralement opposée tandis que le troisième et le quatrième points de mesure sont situés sur la paroi verticale respectivement à distance et à proximité du fond, l'unité de traitement et de calcul comportant des moyens pour calculer, pour chaque position de rotation du récipient, une grandeur fonction d'un angle défini entre un premier segment passant par les premier et deuxième points de mesure et un deuxième segment sécant au premier segment et passant soit par le troisième point de mesure et le premier point de mesure soit par le troisième point de mesure et le quatrième point de mesure, cette unité de traitement et de calcul comportant des moyens pour déterminer une mesure de verticalité à partir des variations de la grandeur fonction de cet angle représentatives de la verticalité du récipient.

Le dispositif selon l'invention comporte en combinaison l'un et/ou l'autre des caractéristiques additionnelles suivantes :
- le système de mesure comporte au moins un quatrième capteur de mesure adapté pour mesurer la position, à chaque position de rotation du récipient, selon un quatrième axe de mesure coplanaire aux premier, deuxième et troisième axe de mesure, d'un quatrième point de mesure situé sur la paroi verticale du récipient et en ce que l'unité de traitement et de calcul comporte des moyens pour calculer, pour chaque position de rotation du récipient, une grandeur fonction d'au moins un angle défini par le premier segment et le deuxième segment passant soit par le troisième et premier points de mesure ou soit par le troisième et le quatrième points de mesure, l'unité de traitement et de calcul comportant des moyens pour déterminer au moins une mesure de verticalité à partir des variations de la grandeur fonction de cet angle,
- les capteurs sont des capteurs sans contact de type optique.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en coupe élévation d'un schéma illustrant un dispositif de détection conforme à l'invention.
La **Figure 2** est une vue de dessus du dispositif de détection conforme à l'invention.
La **Figure 3** est un schéma illustrant le principe de l'invention selon une première variante de réalisation.
La **Figure 4** est un schéma permettant d'illustrer la mesure de verticalité selon l'invention.
La **Figure 5** est un schéma illustrant le principe de l'invention selon une deuxième variante de réalisation.
La **Figure 6** est une courbe représentant un exemple de variation des valeurs de la grandeur fonction de l'angle α selon l'angle de rotation θ du récipient.

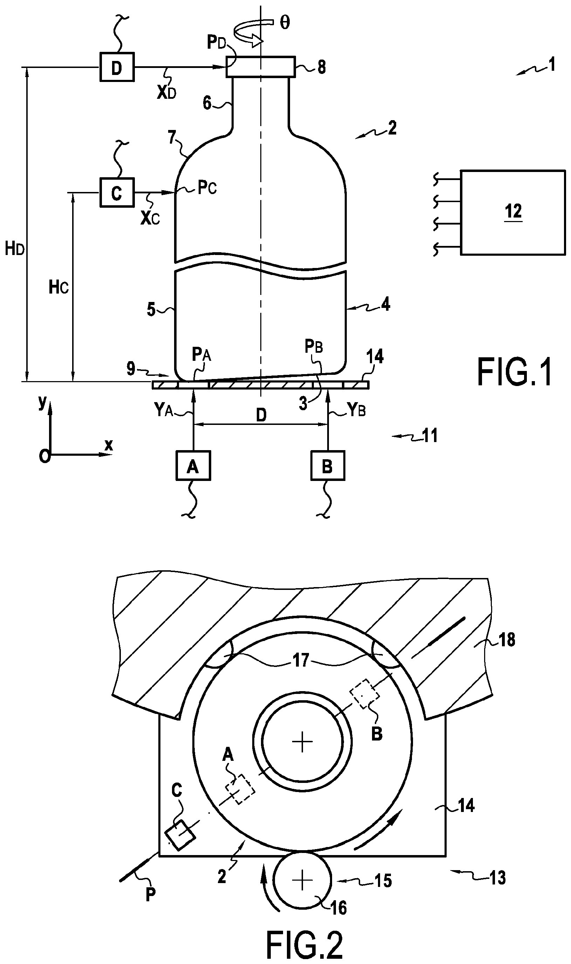

Tel que cela ressort plus précisément des **Fig. 1** et **2**, l'objet de l'invention concerne un dispositif **1** pour mesurer la verticalité sur des récipients **2** par exemple en verre tels que des bouteilles. De manière classique, chaque récipient **2** présente un fond **3** à partir duquel s'élève une paroi verticale **4**. Dans le cas d'un récipient du type bouteille, la paroi verticale **4** présente à partir du fond **3**, une partie **5** formant le corps de la bouteille qui se raccorde à un col **6** par l'intermédiaire d'une épaule **7**. Le col **6** se termine par une partie dite de bague ou goulot **8**. A l'opposé, le corps **5** du récipient **2** se raccorde au fond **3** par un talon ou jable **9**.

Le dispositif de détection **1** comporte un système de mesure **11** relié à une unité **12** de traitement et de calcul permettant de déterminer la mesure de verticalité des bouteilles **2**.

La mesure de verticalité d'un récipient **2** est réalisée alors que le récipient **2** est mis en rotation sur lui-même (angle θ) selon au moins un tour de rotation. A cet égard, chaque récipient **2** est pris en charge par un système d'entraînement **13**. Par exemple, le système d'entraînement **13** comporte un plan de glisse ou de pose **14** pour le fond **3** du récipient **2** ainsi qu'un système de mise en rotation **15** comportant un galet d'entraînement en rotation ou tournette **16** du récipient assujetti en appui par son corps **5** sur deux butées **17** lors de la mise en rotation sur lui-même. Les deux butées **17** font partie par exemple d'une étoile de manutention **18** permettant d'amener successivement des récipients **2** devant le système de mesure **11**. Chaque récipient **2** reste devant le dispositif de détection **1** pendant le temps nécessaire afin d'effectuer au moins un tour sur lui-même pendant lequel des mesures sont réalisées comme cela sera expliqué dans la suite de la description. Les systèmes d'entraînement **13** et de mise en rotation **15** ne sont pas décrits plus précisément car ils ne font pas partie de l'objet de l'invention et sont bien connus de l'homme du métier. Il est à considérer que le système de mise en rotation **15** n'est pas à même de placer les récipients **2** dans une position fixe reproductible par rapport au dispositif de détection **1** et en particulier sur le plan de glisse **14**. Ainsi, comme illustré à la **Fig. 1**, le fond **3** du récipient peut ne pas être entièrement en appui sur la plan de glisse **14** lors de la rotation du récipient.

Le système de mesure **11** comporte au moins trois capteurs de mesure et selon une variante de réalisation illustrée sur la **Fig. 1**, quatre capteurs de mesure **A**, **B**, **C**, **D**, montés de manière fixe et connue par rapport au plan de pose **14**. Le système de mesure **11** comporte un premier capteur de mesure **A** et un deuxième capteur de mesure **B** adaptés pour mesurer la position respectivement selon un premier **YA** et un deuxième **YB** axes de mesure d'un premier **PA** et d'un deuxième **PB** points de mesure situés sur le récipient **2**. Ainsi, chaque point de mesure **PA**, **PB** correspond à un point de la surface externe du récipient **2** situé sur l'axe de mesure considéré.

Le premier point de mesure **PA** et le deuxième point de mesure **PB** sont situés sur le fond **3** du récipient en étant positionnés de façon diamétralement opposé dans un plan de mesure **P**. Le premier capteur **A** est apte à mesurer la position d'un premier point **PA** du fond **3** du récipient, par rapport au premier capteur **A** et selon l'axe de mesure **YA**. De même, le deuxième capteur **B** est apte à mesurer la position d'un deuxième point **PB** du fond **3** par rapport au deuxième capteur **B** et selon l'axe de mesure **YB**.

Le premier axe de mesure **YA** et le deuxième axe de mesure **YB** s'étendent sensiblement parallèlement entre eux et à un axe **y** faisant partie d'un repère orthonormé (**0**, **x**, **y**) situé dans le plan de mesure **P** et comportant un premier axe **x** et un deuxième axe **y** perpendiculaires entre eux. Les premier **YA** et deuxième **YB** axes de mesure sont écartés entre eux d'une distance connue **D**.

Selon une caractéristique de l'invention, le système de mesure **11** comporte nécessairement au moins un troisième capteur de mesure **C** adapté pour mesurer la position d'un troisième point de mesure **PC** situé sur la paroi verticale **4** du récipient **2** à distance du fond **3** et selon un troisième axe de mesure **XC**. Ce troisième axe de mesure **XC** et les premier **YA** et deuxième **YB** axes de mesure sont coplanaires dans le plan de mesure **P**. Ce troisième axe de mesure **XC** est parallèle au premier axe **x** faisant partie du repère orthonormé (**0**, **x**, **y**). Le troisième axe de mesure **XC** peut être situé avantageusement soit sur le corps **5** au niveau de l'épaule **7**, soit sur le col **6** soit sur la bague **8**.

Le positionnement du troisième axe de mesure **XC** à un niveau déterminé de la paroi verticale **4** permet de mesurer la verticalité au niveau de cet axe de mesure. Par exemple, le positionnement du troisième axe de mesure **XC** à proximité de l'épaule **7** permet de déterminer comme cela sera décrit plus précisément dans la suite de la description, une mesure de verticalité au niveau du corps **5** du récipient **2**. De même, le positionnement du troisième axe de mesure **XC** au niveau de la bague **8** permet de déterminer une mesure de verticalité au niveau de la bague **8** du récipient.

Selon la variante illustrée à la **Fig. 1**, le système de mesure **11** comporte un troisième capteur **C** dont l'axe de mesure **XC** (troisième axe de mesure), est situé sur le corps **5** au niveau de l'épaule **7** et un quatrième capteur **D** dont l'axe de mesure **XD** (quatrième axe de mesure) est situé au niveau de la bague **8**. Selon cette variante avantageuse de réalisation, il peut être déterminé une mesure de verticalité du col **6** en prenant en compte la différence entre la mesure de verticalité de la bague **8** et la mesure de verticalité du corps **5**.

Selon une première variante de réalisation illustrée à la **Fig. 1**, le système de mesure **11** comporte quatre capteurs en considérant que le troisième capteur correspond au capteur **C** d'axe de mesure **XC** situé sur le corps **5** au niveau de l'épaule **7** tandis que le quatrième capteur est le capteur **D** situé au niveau de la bague **8** avec un axe de mesure **XD**. Bien entendu, il peut être prévu d'intervertir les positions entre les troisième et quatrième capteurs.

Le troisième capteur de mesure **C** et le quatrième capteur de mesure **D** sont adaptés pour mesurer les positions respectivement selon un troisième **XC** et un quatrième **XD** axes de mesure, d'un troisième **PC** et d'un quatrième **PD** points de mesure situés sur le récipient **2**. Chaque point de mesure **PC**, **PD** correspond à un point de la surface externe du récipient **2** situé sur l'axe de mesure considéré. Dans l'exemple considéré, le troisième point de mesure **PC** est situé sur le corps **5** du récipient à proximité de l'épaule **7** tandis que le quatrième point de mesure **PD** est situé sur la bague **8** du récipient **2**. Le troisième axe de mesure **XC** et le quatrième axe de mesure **XD** s'étendent sensiblement parallèlement entre eux et au premier axe **x** du repère orthonormé (**0**, **x**, **y**). Les premier **YA**, deuxième **YB**, troisième **XC** et quatrième **XD** axes de mesure sont coplanaires entre eux dans le plan de mesure **P**. Le troisième axe de mesure **XC** est distant du plan de pose **14** d'une distance connue **HC** tandis que le quatrième axe de mesure **XD** est distant du plan de pose **14** d'une valeur connue **HD**.

Les capteurs **A** à **D** sont adaptés pour mesurer sans contact ou avec contact, la position des points **PA** à **PD** situés sur le récipient en regard, selon des axes de mesure coplanaires respectivement **YA**, **YB**, **XC**, **XD**. Selon une variante préférée de réalisation, les capteurs de mesure sont du type sans contact. Selon une variante avantageuse de réalisation, les capteurs de mesure **A** à **D** sont des capteurs de mesure sans contact du type optique.

Les capteurs de mesure **A** à **D** sont reliés à une unité **12** de traitement et de calcul permettant de déterminer la mesure de verticalité des récipients **2**. A cet égard, l'unité de traitement et d'acquisition **12** fait une acquisition des mesures effectuées par au moins trois et dans l'exemple illustré les quatre capteurs **A** à **D** à chaque position ou incrément de rotation du récipient **2** et cela, pour au moins un tour de rotation du récipient **2**. Ainsi, il est choisi un pas ou un incrément de rotation de sorte que pour chaque valeur de rotation θ du récipient **2**, l'unité de traitement et de calcul **12** acquiert les mesures d'au moins trois capteurs et dans l'exemple illustré, des quatre capteurs **A** à **D**. Par exemple, il peut être choisi un incrément de rotation de 1 mm conduisant pour un récipient donné, à l'acquisition pour un tour de rotation du récipient, d'une centaine d'acquisitions de mesures, chacune des acquisitions comportant les mesures des quatre capteurs **A** à **D**.

L'unité de traitement et de calcul **12** calcule pour chaque position ou incrément de rotation du récipient **2**, au moins une grandeur fonction d'un angle α défini entre un premier segment **x₁** passant par les premier **PA** et deuxième **PB** points de mesure et un deuxième segment **x₂** sécant au premier segment **x₁** et passant par au moins le troisième point de mesure **PC** de manière que la variation de cet angle α soit représentative de la verticalité du récipient **2**.

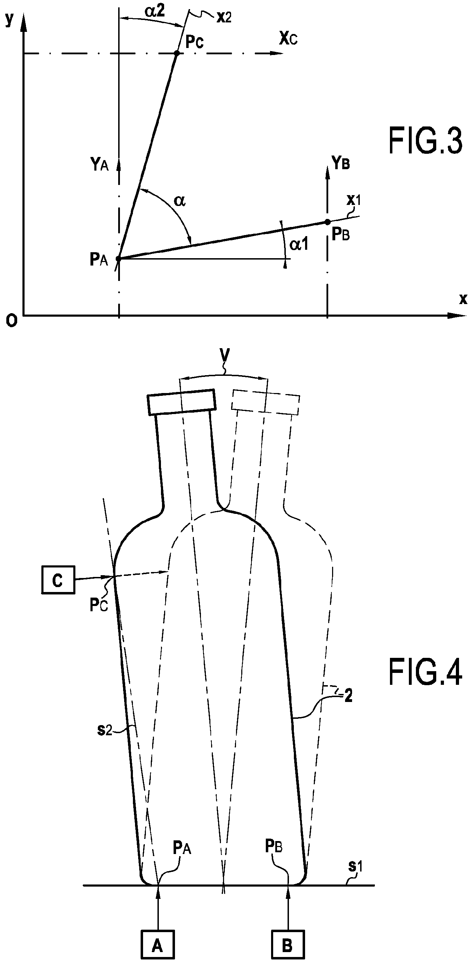

Selon une première variante de réalisation, l'angle α est défini entre le premier segment **x₁** et le deuxième segment **x₂** qui passe par le troisième point de mesure **PC** et le premier point de mesure **PA** (**Fig. 3**). Selon cette première variante, les segments **x₁** et **x₂** sont sécants au premier point de mesure **PA**.

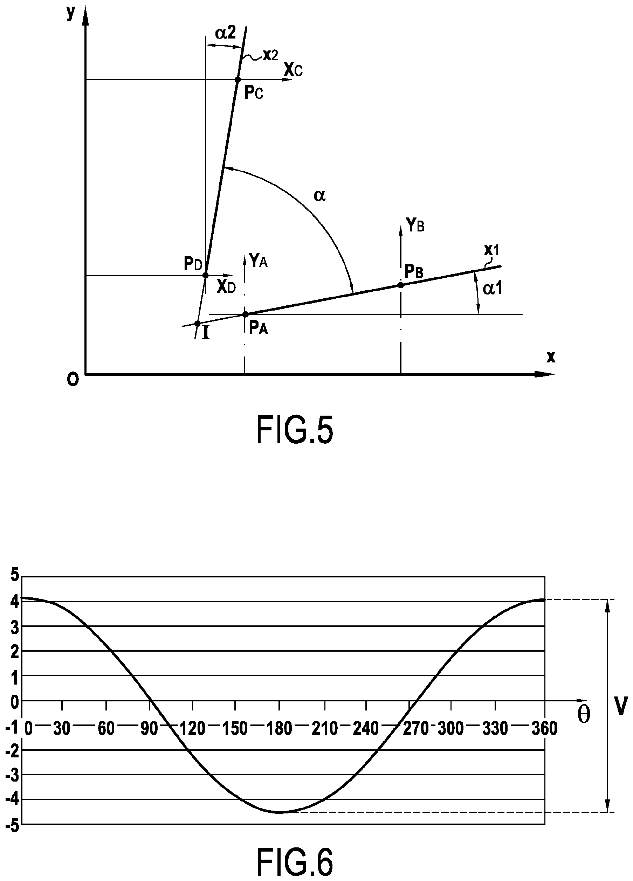

Selon une deuxième variante de réalisation, l'angle α est défini entre le premier segment **x₁** et le deuxième segment **x₂** qui passe par le troisième **PC** et le quatrième **PD** points de mesure, avec le quatrième point de mesure **PD** étant situé sur la paroi verticale **4,** à proximité du fond **3**, c'est-à-dire à proximité du talon **9** du récipient **2** (**Fig. 5**). Selon cette variante de réalisation, le troisième point de mesure **PC** peut être situé à différents niveaux de la paroi verticale **4**. Selon cette deuxième variante, les segments **x₁** et **x₂** sont sécants en un point d'intersection **I**.

Cette grandeur fonction de l'angle α est calculée pour chaque position ou incrément de rotation du récipient **2** et cela pour au moins un tour de rotation sur lui-même du récipient **2**. A partir des variations de cette grandeur sur au moins un tour de rotation du récipient **2**, l'unité de traitement et de calcul **12** mesure la verticalité du récipient **2**.

La prise en compte de deux points **PA** et **PB** sur le fond du récipient **2** et d'au moins un point **PC** sur la paroi verticale **4** du récipient conduit à former un angle α qui est caractéristique de la verticalité du récipient **2**. Ainsi, il est considéré que cet angle α doit rester constant pendant toute la rotation du récipient de sorte que les variations de position des points **PA**, **PB**, **PC** ou **PD** ou les déformations de cet angle α sont représentatives ou proportionnelles à la verticalité du récipient **2**.

L'objet de l'invention vise donc à choisir une grandeur qui dépend de cet angle α de manière que les variations de cette grandeur permettent de mesurer la verticalité. En d'autres termes, l'analyse des variations de la grandeur fonction de cet angle α permet d'en déduire la mesure de verticalité. La mesure de la verticalité est ainsi calculée comme étant l'écart entre la valeur maximale et la valeur minimale de la grandeur fonction de cet angle α. Selon une caractéristique avantageuse de réalisation, la détermination de la mesure de la verticalité est réalisée après une opération de filtrage des valeurs de la grandeur fonction de l'angle α. Cette opération de filtrage vise à éliminer des variations de la grandeur fonction de l'angle α, celles correspondant par exemple à d'autres déformations géométriques d'un récipient telles que son ovalisation ou un fond voilé, à un défaut local de sa paroi telle une bosse ou un creux, à des imperfections dues à la manutention du récipient lors de sa rotation. L'opération de filtrage des variations de la grandeur peut par exemple être une décomposition en fréquences des mesures enregistrées considérées comme un signal monodimensionnel du temps t ou de l'angle de rotation θ, afin de retenir après filtrage, uniquement la composante de fréquence égale à celle de la verticalité c'est-à-dire celle correspondant à un tour du récipient sur lui-même. Bien entendu, il existe différentes solutions pour choisir la grandeur fonction de cet angle α, en fonction notamment de l'expression souhaitée pour la verticalité. D'une manière générale, et comme rappelé dans le préambule de la description, la verticalité d'un récipient s'exprime de diverses façons et en particulier soit en unité d'angle tel que les degrés soient en unité de longueur telle que les millimètres.

Par exemple, en tant que grandeur fonction de l'angle α, il peut être choisi, l'écart entre les angles α₁ et α₂ ou l'écart entre les tangentes des angles α₁ et α₂.

Selon l'exemple illustré à la **Fig. 3**, l'angle α₁ est l'angle d'inclinaison entre d'une part le segment **x₁** passant par le premier point de mesure **PA** et le deuxième point de mesure **PB** et d'autre part, le segment parallèle au premier axe **x** du repère orthonormé (**0**, **x**, **y**). De même, l'angle **α₂** est l'angle d'inclinaison entre d'une part le segment **x₂** passant par le premier point de mesure **PA** et le troisième point de mesure **PC** et d'autre part, le segment parallèle au deuxième axe **y** du repère orthonormé (**0**, **x**, **y**).

Selon l'exemple illustré à la **Fig. 5**, l'angle **α₁** est l'angle d'inclinaison entre d'une part le segment **x₁** passant par le premier point de mesure **PA** et le deuxième point de mesure **PB** et d'autre part, le segment parallèle au premier axe **x** du repère orthonormé (**0**, **x**, **y**). De même, l'angle **α₂** est l'angle d'inclinaison entre d'une part, le segment **x₂** passant par le troisième point de mesure **PC** et le quatrième point de mesure **PD** et d'autre part, le segment parallèle au deuxième axe **y** du repère orthonormé (**0**, **x**, **y**).

Ainsi, par exemple le calcul de tg (α₁) correspond à la différence entre les coordonnées ou positions des points **PB** et **PA** selon l'axe **y**, divisée par la distance **D** séparant les deux capteurs **A** et **B**. De la même manière, le calcul de tg (α₂) correspond, pour l'exemple illustré à la **Fig. 3**, à la différence entre les coordonnées ou positions des points **PC** et **PA** selon l'axe **x**, divisée par la distance **HC** séparant les deux capteurs **A** et **C**. Le calcul de tg (**x₂**) correspond, pour l'exemple illustré à **Fig. 5**, à la différence entre les coordonnées ou positions des troisième et quatrième points **PC** et **PD** selon l'axe **x**, divisée par la distance séparant le troisième **PC** et le quatrième **PD** capteurs.

Il est à noter que les positions des points de mesure **PA** à **PC** peuvent être référencées à une valeur nulle.

L'écart entre les tg (α₁) et tg (α₂) est calculé pour chaque incrément de rotation. La mesure de la verticalité **V** correspond à la différence entre la valeur maximum et la valeur minimum de cet écart calculées pour les diverses positions du récipient prises sur un tour (**Fig. 4**). La **Fig. 6** illustre en fonction de l'angle de rotation θ sur 360°, les variations des valeurs de la grandeur fonction de l'angle α. La mesure de la verticalité **V** correspond à la différence entre la valeur maximale et la valeur minimale de la grandeur fonction de l'angle α.

Selon une variante de réalisation, cette mesure de verticalité est comparée à une valeur de référence ou de comparaison pour déterminer la présence d'un défaut de verticalité. Ainsi, si la mesure de verticalité est inférieure à cette valeur de référence, le récipient est considéré comme non défectueux tandis que si la mesure de verticalité est supérieure à cette valeur de référence, le récipient est considéré comme présentant un défaut de verticalité.

Il ressort de la description qui précède que l'invention permet de mesurer la verticalité réelle des récipients puisque le principe de mesure est indépendant de l'axe de rotation du poste d'inspection. La prise en compte d'au moins deux points de mesure sur le fond du récipient et d'au moins un point de mesure sur la paroi verticale **4** du récipient permet de définir un angle α entre deux segments **x₁**, **x₂** dont les variations sont caractéristiques de la verticalité du récipient. Il est à noter que ces deux segments **x₁** et **x₂** sécants forment les deux côtés d'un triangle dont les déformations sont également représentatives de la verticalité du récipient **2** (le troisième côté du triangle étant formé par le segment passant par les deuxième **PB** et troisième **PC** points de mesure).

Dans la description qui précède, l'angle α est défini en mettant en oeuvre trois capteurs (**Fig. 3**) ou quatre capteurs (**Fig. 5**). Il est à noter que la variante illustrée à la **Fig. 5** permet de s'affranchir des erreurs de mesure dues à une translation du récipient **2** selon le premier axe **x** du repère **(0, x, y)**.

Bien entendu, la mesure de verticalité peut être réalisée à n'importe quel niveau de la paroi verticale **4** (par le capteur **C**). De même, il peut être avantageux de mesurer la verticalité à deux hauteurs différentes, par exemple à un point de mesure situé sur le corps **5** le plus loin possible du fond **3** comme à proximité de l'épaule **7**, et à un point de mesure situé sur la bague **8**. L'unité de traitement et de calcul **12** calcule ainsi comme expliqué ci-dessus, pour chaque position de rotation du récipient **2**, une grandeur fonction d'un angle α avec un point de mesure situé sur le corps **5** à proximité de l'épaule **7** et une grandeur fonction d'un angle α avec un point de mesure situé sur la bague **8**. Il peut ainsi être défini une mesure de verticalité de corps et une mesure de verticalité totale. De ce fait, il peut être défini une troisième mesure de verticalité du col **6** par rapport au corps **5**, à partir de la différence entre les mesures de verticalité totale et de corps.

Il est à noter que dans le cas où l'angle α est défini entre le segment **x₁** et un segment **x₂** passant par deux points de mesure différents des deux points de mesure par lesquels passe le segment **x₁** (**Fig. 5**) alors le dispositif selon l'invention comporte cinq capteurs de mesure pour réaliser cette troisième mesure de verticalité. Ainsi, selon cette variante, le dispositif comporte deux capteurs **A** et **B** pour les deux points de mesure situés sur le fond **3**, deux capteurs **C** et **D** pour les deux points de mesure situés respectivement à proximité de l'épaule **7** et du talon **9** pour la mesure de la verticalité de corps, et un cinquième capteur non représenté pour un point de mesure situé sur la bague **8** permettant la mesure en combinaison avec le capteur **D**, de la verticalité totale. Ce cinquième capteur présente les mêmes caractéristiques que celles décrites précédemment pour le quatrième capteur **D** pour la mesure située au niveau de la bague **8**.

Dans la description qui précède, il est considéré que la paroi verticale **4** présente au droit des axes de mesure **XC**, **XD**, une section cylindrique. Dans l'hypothèse où la paroi verticale **4** n'est pas strictement verticale, il peut être envisagé d'adapter le fonctionnement et/ou la position des capteurs **C** et **D**. Dans l'hypothèse de récipients **2** de section non circulaire par exemple ovale, elliptique ou polygonale, il peut être prévu à partir de la géométrie théorique de l'article, de prédire les déformations normales de l'angle α au cours de la rotation du récipient **2** et d'en déduire une mesure de verticalité des écarts entre les déformations normales de l'angle α et les déformations mesurées.

L'invention n'est pas limitée aux exemples décrits et représentés car diverses modifications peuvent y être apportées sans sortir de son cadre tel que spécifié dans les revendications 1 à 17.

## Revendications

1. Procédé pour mesurer la verticalité sur un récipient (**2**) présentant un fond (**3**) à partir duquel s'élève une paroi verticale (**4**), le procédé consistant à faire tourner le récipient (**2**) sur lui-même sur au moins un tour et à effectuer, au cours de la rotation du récipient, des mesures à différentes positions de rotation du récipient, **caractérisé en ce qu'**il consiste :
• à mesurer à chaque position de rotation du récipient (**2**), au moins:
- la position selon un premier axe de mesure (**YA**), d'au moins un premier point (**PA**) de mesure situé sur le fond (**3**),
- la position selon un deuxième axe de mesure (**YB**), d'un deuxième point de mesure (**PB**) situé sur le fond (**3**) de façon diamétralement opposé au premier point de mesure,
- la position selon un troisième axe de mesure (**XC**), d'au moins un troisième point de mesure (**PC**) situé sur la paroi verticale (**4**) à distance du fond (**3**),
- et éventuellement la position selon un quatrième axe de mesure (**XD**), d'au moins un quatrième point de mesure (**PD**) situé sur la paroi verticale (**h**) à proximité du fond (**3**),
- les premier, deuxième, troisième et quatrième axes de mesure étant coplanaires dans un plan de mesure (**P**),
• à calculer pour chaque position de rotation du récipient (**2**), une grandeur fonction d'un angle (α) caractéristique de la verticalité du récipient (**2**) et défini entre un premier segment (**x₁**) passant par les premier (**PA**) et deuxième (**PB**) points de mesure et un deuxième segment (**x₂**) sécant au premier segment et passant soit par le troisième point de mesure (**PC**) et le premier point de mesure (**PA**) soit par le troisième point de mesure (**PC**) et le quatrième point de mesure (**PD**),
• et à mesurer la verticalité à partir des variations de la grandeur fonction de cet angle (α), considérées sur au moins un tour de rotation du récipient.

2. Procédé selon la revendication 1, **caractérisé en ce qu'**il consiste à mesurer la verticalité en effectuant la différence entre la valeur maximale et la valeur minimale de la grandeur fonction de l'angle (α).

3. Procédé selon la revendication 2, **caractérisé en ce qu'**il consiste à mesurer la verticalité, après une opération de filtrage des variations de la grandeur fonction de l'angle (α).

4. Procédé selon l'une des revendications 1 à 3, **caractérisé en ce qu'**il consiste à choisir l'angle (α) défini entre le premier segment et le deuxième segment (**x₂**) passant par le troisième point de mesure (**PC**) et le premier point de mesure (**PA**).

5. Procédé selon l'une des revendications 1 à 4, **caractérisé en ce qu'**il consiste à mesurer à chaque position de rotation du récipient (**2**), la position selon au moins un quatrième axe de mesure (**XD**) voire un cinquième axe de mesure coplanaires aux premier (**YA**), deuxième (**YB**) et troisième (**XC**) axes de mesure, d'au moins un quatrième (**PD**) point de mesure voire un cinquième point de mesure situés sur la paroi verticale (**4**) du récipient en des lieux différents du troisième point (**PC**) de mesure.

6. Procédé selon la revendication 5, **caractérisé en ce qu'**il consiste à choisir les positions du troisième (**PC**) et du quatrième (**PD**) points de mesure sur la paroi verticale (**4**) situées sur le corps (**5**) le plus loin possible du fond, et sur la bague (**8**) du récipient, de manière à définir un angle (α) défini entre le premier segment et le deuxième segment passant par le troisième (**PC**) et premier (**PA**) points de mesure et un autre angle (α) défini entre le premier segment et le deuxième segment passant par le quatrième (**PD**) et premier (**PA**) points de mesure permettant de définir une mesure de verticalité de corps pour le point situé sur le corps (**5**) et une mesure de verticalité totale pour le point situé sur la bague (**8**).

7. Procédé selon l'une des revendications 1 à 6, **caractérisé en ce qu'**il consiste à choisir au moins un angle (α) défini entre le premier segment (**x₁**) et le deuxième segment (**x₂**) passant par le troisième point de mesure (**PC**) et le quatrième point de mesure (**PD**) situé à proximité du talon (**9**).

8. Procédé selon la revendication 7, **caractérisé en ce qu'**il consiste à choisir la position du troisième point de mesure (**PC**) sur le corps (**5**) le plus loin possible du fond pour déterminer une mesure de verticalité de corps et à choisir la position du cinquième point de mesure sur la bague (**8**) du récipient de manière à définir un autre angle (α) défini entre le premier segment (**x₁**) et le deuxième segment (**x₂**) passant les quatrième **PD** et cinquième points de mesure permettant de définir une mesure de verticalité totale.

9. Procédé selon la revendication 6 ou 8, **caractérisé en ce qu'**il consiste à déterminer une mesure de verticalité du col (**6**) par rapport au corps (**5**) à partir de la différence entre les mesures de verticalité totale et de corps.

10. Procédé selon la revendication 1, **caractérisé en ce qu'**il consiste à calculer, pour chaque position de rotation du récipient, en tant que grandeur fonction de l'angle α défini par les premier (**PA**), deuxième (**PB**) et troisième (**PC**) points de mesure ou défini par les premier (**PA**), deuxième (**PB**) et quatrième (**PD**) points de mesure, l'écart entre les angles α₁ et α₂ ou l'écart entre les tangentes des angles α₁ et α₂, avec :
• et α₁ étant l'angle d'inclinaison entre le segment passant par les premier (**PA**) et deuxième (**PB**) points de mesure et un segment parallèle à un premier axe (**x**) parallèle au troisième axe de mesure (**XC**) et faisant partie d'un repère orthonormé (**0**, **x**, **y**) situé dans le plan de mesure (**P**),
• et α₂ étant l'angle d'inclinaison entre le segment passant par soit par le premier (**PA**) et troisième (**PC**) ou quatrième (**PD**) points de mesure soit par les troisième (**PC**) et quatrième (**PD**) points de mesure et un segment parallèle à un deuxième axe (**y**) parallèle aux premiers (**YA**) et deuxième (**YB**) axes de mesure et faisant partie du repère orthonormé (**0**, **x**, **y**).

11. Procédé selon l'une des revendications 1 à 8, **caractérisé en ce qu'**il consiste à référencer à une valeur nulle, les positions mesurées par les capteurs (**A** à **D**).

12. Procédé selon l'une des revendications 1 à 9, **caractérisé en ce qu'**il consiste à comparer la mesure de verticalité à une valeur de référence pour déterminer la présence ou non d'un défaut de verticalité.

13. Procédé selon l'une des revendications 1 à 12, **caractérisé en ce qu'**il consiste à mesurer la position des différents points de mesure à l'aide de capteurs de contact ou sans contact avec le récipient.

14. Procédé selon la revendication 13, **caractérisé en ce qu'**il consiste à mesurer la position des différents points de mesure à l'aide de capteurs sans contact de type optique.

15. Dispositif pour mesurer la verticalité sur des récipients (**2**) présentant un fond (**3**) à partir duquel s'élève une paroi verticale (**4**), chaque récipient étant entraîné en rotation sur lui-même selon au moins un tour, le dispositif comportant un système de mesure (**11**) relié à une unité de traitement et de calcul (**12**), **caractérisé en ce que** :
- le système de mesure (**11**) comporte au moins trois et éventuellement quatre capteurs de mesure (**A**, **B**, **C**, **D**) adaptés pour mesurer la position selon un premier (**YA**), un deuxième (**YB**), un troisième (**XC**) et un quatrième (**XD**) axes de mesure coplanaires entre eux, respectivement d'un premier (**PA**), d'un deuxième (**PB**), d'un troisième (**PC**) et d'un quatrième (**PD**) points de mesure, le premier (**PA**) et le deuxième (**PB**) points de mesure étant situés sur le fond (**3**) du récipient de façon diamétralement opposée tandis que le troisième (**PC**) et le quatrième (**PD**) points de mesure sont situés sur la paroi verticale (**4**) respectivement à distance et à proximité du fond (**3**),
- l'unité de traitement et de calcul (**12**) comporte des moyens pour calculer, pour chaque position de rotation du récipient (**2**), une grandeur fonction d'un angle (α) défini entre un premier segment passant par les premier (**PA**) et deuxième (**PB**) points de mesure et un deuxième segment sécant au premier segment et passant soit par le troisième point de mesure (**PC**) et le premier point de mesure (**PA**) soit par le troisième point de mesure (**PC**) et le quatrième point de mesure (**PD**), cette unité de traitement et de calcul (**12**) comportant des moyens pour déterminer une mesure de verticalité à partir des variations de la grandeur fonction de cet angle représentatives de la verticalité du récipient (**2**).

16. Dispositif selon la revendication 15, **caractérisé en ce que** le système de mesure (**11**) comporte au moins un quatrième capteur de mesure (**D**) adapté pour mesurer la position, à chaque position de rotation du récipient (**2**), selon un quatrième axe de mesure (**XD**) coplanaire aux premier (**YA**), deuxième (**YB**) et troisième (**XC**) axe de mesure, d'un quatrième (**PD**) point de mesure situé sur la paroi verticale (**4**) du récipient et **en ce que** l'unité de traitement et de calcul (**12**) comporte des moyens pour calculer, pour chaque position de rotation du récipient (**2**), une grandeur fonction d'au moins un angle (α) défini par le premier segment et le deuxième segment passant soit par le troisième (**PC**) et premier (**Pb**A) points de mesure ou soit par le troisième (**PC**) et le quatrième (**PD**) points de mesure, l'unité de traitement et de calcul (**12**) comportant des moyens pour déterminer au moins une mesure de verticalité à partir des variations de la grandeur fonction de cet angle.

17. Dispositif selon la revendication 15 ou 16, **caractérisé en ce que** les capteurs (**A**,**B**,**C**,**D**) sont des capteurs sans contact de type optique.

## Patentansprüche

1. Verfahren zum Messen der Vertikalität an einem Behälter (2), der einen Boden (3) aufweist, von dem aus sich eine vertikale Wand (4) erhebt, wobei das Verfahren darin besteht, den Behälter (2) wenigstens eine Umdrehung um sich selbst zu drehen und während des Drehens des Behälters Messungen an verschiedenen Drehpositionen des Behälters durchzuführen, **dadurch gekennzeichnet, dass** es darin besteht:
• an jeder Drehposition des Behälters (2) wenigstens zu messen:
- die Position, entlang einer ersten Messachse (YA), von wenigstens einer am Boden (3) befindlichen ersten Messstelle (PA),
- die Position, entlang einer zweiten Messachse (YB), von einer zweiten Messstelle (PB), die sich der ersten Messstelle diametral gegenüberliegend am Boden (3) befindet,
- die Position, entlang einer dritten Messachse (XC), von wenigstens einer dritten Messstelle (PC), die sich an der vertikalen Wand (4) im Abstand vom Boden (3) befindet,
- und eventuell die Position, entlang einer vierten Messachse (XD), von wenigstens einer vierten Messstelle (PD), die sich an der vertikalen Wand (h) in der Nähe des Bodens (3) befindet,
- wobei die erste, zweite, dritte und vierte Messachse in einer Messebene (P) koplanar sind,
• für jede Drehposition des Behälters (2) eine Größe zu berechnen, die von einem Winkel (α) abhängig ist, welcher für die Vertikalität des Behälters (2) charakteristisch ist und zwischen einem ersten Segment (x₁), das durch die erste (PA) und die zweite (PB) Messstelle verläuft, und einem zweiten Segment (x₂), das zu dem ersten Segment schneidend ist und entweder durch die dritte Messstelle (PC) und die erste Messstelle (PA) oder durch die dritte Messstelle (PC) und die vierte Messstelle (PD) verläuft, definiert ist,
• und die Vertikalität anhand der über wenigstens eine Umdrehung des Behälters betrachteten Änderungen der von diesem Winkel (α) abhängigen Größe zu messen.

2. Verfahren nach Anspruch 1, **dadurch gekennzeichnet, dass** es darin besteht, die Vertikalität zu messen, indem die Differenz zwischen dem Maximalwert und dem Minimalwert der von dem Winkel (α) abhängigen Größe gebildet wird.

3. Verfahren nach Anspruch 2, **dadurch gekennzeichnet, dass** es darin besteht, die Vertikalität nach einer Operation des Filterns der Änderungen der von dem Winkel (α) abhängigen Größe zu messen.

4. Verfahren nach einem der Ansprüche 1 bis 3, **dadurch gekennzeichnet, dass** es darin besteht, den Winkel (α) zu wählen, der zwischen dem ersten Segment und dem durch die dritte Messstelle (PC) und die erste Messstelle (PA)verlaufenden zweiten Segment (x₂) definiert ist.

5. Verfahren nach einem der Ansprüche 1 bis 4, **dadurch gekennzeichnet, dass** es darin besteht, an jeder Drehposition des Behälters (2) die Position entlang wenigstens einer vierten Messachse (XD), ja sogar einer fünften Messachse, die zu der ersten (YA), zweiten (YB) und dritten (XC) Messachse koplanar sind, von wenigstens einer vierten Messstelle (PD), ja sogar einer fünften Messstelle, welche sich an der vertikalen Wand (4) des Behälters an von der dritten Messstelle (PC) verschiedenen Stellen befinden, zu messen.

6. Verfahren nach Anspruch 5, **dadurch gekennzeichnet, dass** es darin besteht, die Positionen der dritten (PC) und der vierten (PD) Messstelle an der vertikalen Wand (4), welche sich an dem Körper (5) möglichst weit vom Boden befinden, sowie an dem Ring (8) des Behälters zu wählen, um einen Winkel (α), welcher zwischen dem ersten Segment und dem durch die dritte (PC) und die erste (PA) Messstelle verlaufenden zweiten Segment definiert ist, sowie einen weiteren Winkel (α) zu definieren, welcher zwischen dem ersten Segment und dem durch die vierte (PD) und die erste (PA) Messstelle verlaufenden zweiten Segment definiert ist, was ermöglicht, ein Maß der Körpervertikalität für die an dem Körper (5) befindliche Stelle und ein Maß der Gesamtvertikalität für die an dem Ring (8) befindliche Stelle zu definieren.

7. Verfahren nach einem der Ansprüche 1 bis 6, **dadurch gekennzeichnet, dass** es darin besteht, wenigstens einen Winkel (α) zu wählen, der zwischen dem ersten Segment (x₁) und dem durch die dritte Messstelle (PC) und die nahe dem Absatz (9) gelegene vierte Messstelle (PD) verlaufenden zweiten Segment (x₂) definiert ist.

8. Verfahren nach Anspruch 7, **dadurch gekennzeichnet, dass** es darin besteht, die Position der dritten Messstelle (PC) an dem Körper (5) möglichst weit vom Boden zu wählen, um ein Maß der Körpervertikalität zu bestimmen, und die Position der fünften Messstelle an dem Ring (8) des Behälters zu wählen, um einen weiteren Winkel (α) zu definieren, der zwischen dem ersten Segment (x₁) und dem durch die vierte (PD) und die fünfte Messstelle verlaufenden zweiten Segment (x₂) definiert ist, was ermöglicht, ein Maß der Gesamtvertikalität zu definieren.

9. Verfahren nach Anspruch 6 oder 8, **dadurch gekennzeichnet, dass** es darin besteht, aus der Differenz zwischen den Maßen der Gesamt- und der Körpervertikalität ein Maß der Vertikalität des Halses (6) in Bezug auf den Körper (5) zu bestimmen.

10. Verfahren nach Anspruch 1, **dadurch gekennzeichnet, dass** es darin besteht, für jede Drehposition des Behälters als Größe, die von dem Winkel α, welcher durch die erste (PA), die zweite (PB) und die dritte (PC) Messstelle definiert ist oder durch die erste (PA), die zweite (PB) und die vierte (PD) Messstelle definiert ist, abhängig ist, die Abweichung zwischen den Winkeln α₁ und α₂ oder die Abweichung zwischen den Tangenten der Winkel α₁ und α₂ zu berechnen, wobei:
• α₁ der Neigungswinkel zwischen dem Segment, das durch die erste (PA) und die zweite (PB) Messstelle verläuft, und einem Segment parallel zu einer ersten Achse (x) ist, welche parallel zu der dritten Messachse (XC) verläuft und zu einem orthonormalen Koordinatensystem (0, x, y) gehört, das in der Messebene (P) liegt,
• α₂ der Neigungswinkel zwischen dem Segment, das entweder durch die erste (PA) und die dritte (PC) oder vierte (PD) Messstelle oder durch die dritte (PC) und die vierte (PD) Messstelle verläuft, und einem Segment parallel zu einer zweiten Achse (y) ist, welche parallel zu der ersten (YA) und zweiten (YB) Messachse verläuft und zu dem orthonormalen Koordinatensystem (0, x, y) gehört.

11. Verfahren nach einem der Ansprüche 1 bis 8, **dadurch gekennzeichnet, dass** es darin besteht, die durch die Sensoren (A bis D) gemessenen Positionen auf einen Nullwert zu referenzieren.

12. Verfahren nach einem der Ansprüche 1 bis 9, **dadurch gekennzeichnet, dass** es darin besteht, das Maß der Vertikalität mit einem Referenzwert zu vergleichen, um das Vorhandensein oder Nichtvorhandensein eines Vertikalitätsfehlers zu bestimmen.

13. Verfahren nach einem der Ansprüche 1 bis 12, **dadurch gekennzeichnet, dass** es darin besteht, die Position der verschiedenen Messstellen mit Hilfe von Sensoren in Kontakt oder ohne Kontakt mit dem Behälter zu messen.

14. Verfahren nach Anspruch 13, **dadurch gekennzeichnet, dass** es darin besteht, die Position der verschiedenen Messstellen mit Hilfe von berührungslosen Sensoren vom optischen Typ zu messen.

15. Vorrichtung zum Messen der Vertikalität an Behältern (2), die einen Boden (3) aufweisen, von dem aus sich eine vertikale Wand (4) erhebt, wobei jeder Behälter wenigstens eine Umdrehung um sich selbst drehangetrieben wird, wobei die Vorrichtung ein Messsystem (11) umfasst, das mit einer Verarbeitungs- und Berechnungseinheit (12) verbunden ist, **dadurch gekennzeichnet, dass**:
- das Messsystem (11) wenigstens drei und eventuell vier Messsensoren (A, B, C, D) umfasst, die dazu ausgelegt sind, die Position entlang einer ersten (YA), einer zweiten (YB), einer dritten (XC) und einer vierten (XD) Messachse, welche zueinander koplanar sind, von einer ersten (PA), einer zweiten (PB), einer dritten (PC) bzw. einer vierten (PD) Messstelle zu messen, wobei sich die erste (PA) und die zweite (PB) Messstelle am Boden (3) des Behälters diametral gegenüberliegend befinden, während sich die dritte (PC) und die vierte (PD) Messstelle an der vertikalen Wand (4) in einem Abstand bzw. in der Nähe des Bodens (3) befinden,
- die Verarbeitungs- und Berechnungseinheit (12) Mittel umfasst, um für jede Drehposition des Behälters (2) eine Größe zu berechnen, die von einem Winkel (α) abhängig ist, welcher zwischen einem durch die erste (PA) und die zweite (PB) Messstelle verlaufenden ersten Segment und einem zweiten Segment, welches zu dem ersten Segment schneidend ist und entweder durch die dritte Messstelle (PC) und die erste Messstelle (PA) oder durch die dritte Messstelle (PC) und die vierte Messstelle (PD) verläuft, definiert ist, wobei diese Verarbeitungs- und Berechnungseinheit (12) Mittel umfasst, um ein Maß der Vertikalität anhand der für die Vertikalität des Behälters (2) repräsentativen Änderungen der von diesem Winkel abhängigen Größe zu bestimmen.

16. Vorrichtung nach Anspruch 15, **dadurch gekennzeichnet, dass** das Messsystem (11) wenigstens einen vierten Messsensor (D) umfasst, der dazu ausgebildet ist, die Position, an jeder Drehposition des Behälters (2), entlang einer vierten Messachse (XD), welche zu der ersten (YA), der zweiten (YB) und der dritten (XC) Messachse koplanar ist, von einer vierten (PD) Messstelle, welche an der vertikalen Wand (4) des Behälters gelegen ist, zu messen, und dass die Verarbeitungs- und Berechnungseinheit (12) Mittel umfasst, um für jede Drehposition des Behälters (2) eine Größe zu berechnen, die von wenigstens einem Winkel (α) abhängig ist, welcher durch das erste Segment und das zweite Segment, das entweder durch die dritte (PC) und die erste (PA) Messstelle oder durch die dritte (PC) und die vierte (PD) Messstelle verläuft, definiert ist, wobei die Verarbeitungs- und Berechnungseinheit (12) Mittel umfasst, um wenigstens ein Maß der Vertikalität anhand der Änderungen der von diesem Winkel abhängigen Größe zu bestimmen.

17. Vorrichtung nach Anspruch 15 oder 16, **dadurch gekennzeichnet, dass** die Sensoren (A, B, C, D) berührungslose Sensoren vom optischen Typ sind.

## Claims

1. A method for measuring the verticality of a container (2) having a base (3) from which rises a vertical wall (4), the method consisting of rotating the container (2) on itself over at least one revolution and of conducting, during the rotation of the container, measurements at different rotational positions of the container, **characterized in that** it consists of:
• measuring at each rotational position of the container (2), at least:
- the position along a first measurement axis (YA), of at least one first measuring point (PA) located on the base (3),
- the position along a second measurement axis (YB), of a second measuring point (PB) located on the base (3) diametrically opposite to the first measuring point,
- the position along a third measurement axis (XC), of at least one third measuring point (PC) located on the vertical wall (4) at a distance from the base (3),
- and optionally the position along a forth measurement axis (XD), of at least one forth measuring point (PD) located on the vertical wall (h) in proximity to the bottom (3),
- the first, second, third and forth measurement axes being coplanar in a measurement plane (P),
• calculating for each rotational position of the container (2), a quantity depending on an angle (α) which is characteristic of the verticality of the container (2) and defined between a first segment (x₁) passing through the first (PA) and second (PB) measuring points and a second segment (x₂) intersecting the first segment and either passing through the third (PC) and first (PA) measuring points or through the third (PC) and fourth (PD) measuring points,
• and measuring the verticality from the variations of the quantity depending on this angle (α), considered over at least one revolution of the container.

2. The method according to claim 1, **characterized in that** it consists of measuring the verticality by calculating the difference between the maximum value and the minimum value of the quantity depending on the angle (α).

3. The method according to claim 2, **characterized in that** it consists of measuring the verticality, after an operation for filtering the variations of the quantity depending on the angle (α).

4. The method according to one of claims 1 to 3, **characterized in that** it consists of selecting the angle (α) defined between the first segment and the second segment (x₂) passing through the third measuring point (PC) and the first measuring point (PA).

5. The method according to one of claims 1 to 4, **characterized in that** it consists of measuring at each rotational position of the container (2), the position along at least one fourth measurement axis (XD) or even a fifth measurement axis coplanar with the first (YA), second (YB) and third (XC) measurement axes, of at least one fourth measuring point (PD) or even a fifth measuring point located on the vertical wall (4) of the container in different locations of the third measuring point (PC).

6. The method according to claim 5, **characterized in that** it consists of selecting the positions of the third (PC) and fourth (PD) measuring points on the vertical wall (4) located on the body (5) as far as possible from the base, and on the ring (8) of the container, so as to define an angle (α) defined between the first segment and the second segment passing through the third (PC) and first (PA) measuring points and another angle (α) defined between the first segment and the second segment passing through the fourth (PD) and first (PA) measuring points allowing definition of a measurement of verticality of the body for the point located on the body (5) and a measurement of total verticality for the point located on the ring (8).

7. The method according to one of claims 1 to 6, **characterized in that** it consists of selecting at least one angle (α) defined between the first segment (x₁) and the second segment (x₂) passing through the third measuring point (PC) and the fourth measuring point (PD) located in proximity to the heel (9).

8. The method according to claim 7, **characterized in that** it consists of selecting the position of the third measuring point (PC) on the body (5) as far as possible from the base for determining a measurement of body verticality and of selecting the position of the fifth measuring point on the ring (8) of the container so as to define another angle (α) defined between the first segment (x₁) and the second segment (x₂) passing through the fourth (PD) and fifth measuring points allowing definition of a measurement of total verticality.

9. The method according to claim 6 or 8, **characterized in that** it consists of determining a measurement of verticality of the neck (6) relatively to the body (5) from the difference between the total and body verticality measurements.

10. The method according to claim 1, **characterized in that** it consists of calculating, for each rotational position of the container, as a quantity depending on the angle (α) defined by the first (PA), second (PB) and third (PC) measuring points or defined by the first (PA), second (PB) and fourth (PD) measuring points, the deviation between the angles α₁ and α₂ or the deviation between the tangents of the angles α₁ and α₂, with:
• and α₁ being the tilt angle between the segment passing through the first (PA) and second (PB) measuring points and a segment parallel to a first axis (x) parallel to the third measurement axis (XC) and being part of an orthonormal reference system (0, x, y) located in the measurement plane (P),
• and α₂ being the tilt angle between the segment either passing through the first (PA) and third (PC) or fourth (PD) measuring points or through the third (PC) and fourth (PD) measuring points and a segment parallel to a second axis (y) parallel to the first (YA) and second (YB) measurement axes and being part of the orthonormal reference system (0, x, y).

11. The method according to one of claims 1 to 8, **characterized in that** it consists of referencing to a zero value, the positions measured by the sensors (A to D).

12. The method according to one of claims 1 to 9, **characterized in that** it consists of comparing the verticality measurement with a reference value for determining the presence of a lack of verticality or not.

13. The method according to one of claims 1 to 12, **characterized in that** it consists of measuring the position of the different measuring points by means of sensors in contact or without any contact with the container.

14. The method according to claim 13, **characterized in that** it consists of measuring the position of the different measuring points by means of contactless sensors of the optical type.

15. A device for measuring the verticality on containers (2) having a base (3) from which rises a vertical wall (4), each container being driven into rotation on itself according to at least one revolution, the device including a measurement system (11) connected to a processing and calculation unit (12), **characterized in that**:
- the measurement system (11) includes at least three and optionally four measurement sensors (A, B, C, D) suitable for measuring the position along first (YA), second (YB), third (XC) and forth (XD) measurement axes coplanar with each other, respectively of first (PA), second (PB), third (PC) and forth (PD) measuring points, the first (PA) and second (PB) measuring points being located on the base (3) of the container diametrically opposite to each other while the third (PC) and the forth (PD) measuring points are located on the vertical wall (4) respectively at a distance and in proximity to the base (3),
- the processing and calculation unit (12) includes means for calculating, for each rotational position of the container (2), a quantity depending on an angle (α) defined between a first segment passing through the first (PA) and second (PB) measuring points and a second segment intersecting the first segment and either passing through the third (PC) and first (PA) measuring points or through the third (PC) and fourth (PD) measuring points, this processing and calculation unit (12) including means for determining a verticality measurement from variations of the quantity depending on this angle which is representative of the verticality of the container (2).

16. The device according to claim 15, **characterized in that** the measurement system (11) includes at least one fourth measurement sensor (D) suitable for measuring the position, at each rotational position of the container (2), along a fourth measurement axis (XD) coplanar with the first (YA), second (YB) and third (XC) measurement axes, of a fourth (PD) measuring point located on the vertical wall (4) of the container and **in that** the processing and calculation unit (12) includes means for calculating, for each rotational position of the container (2), a quantity depending on at least one angle (α) defined by the first segment and the second segment either passing through the third (PC) and first (PA) measuring points or through the third (PC) and fourth (PD) measuring points, the processing and calculation unit (12) including means for determining at least one measurement of verticality from the variations of the quantity depending on this angle.

17. The device according to claim 15 or 16, **characterized in that** the sensors (A, B, C, D) are contactless sensors of the optical type.
